# EUROPÄISCHE PATENTSCHRIFT

(11) **EP 0 914 984 B1**
(45) Veröffentlichungstag und Bekanntmachung des Hinweises auf die Patenterteilung: **26.06.2002**
(21) Anmeldenummer: 98118835.2
(22) Anmeldetag: 06.10.1998
(51) Int. Cl.: B60K 15/05

(54) **Tankklappe zum Abdecken des Tankstutzens bei Kraftfahrzeugen**
Tank flap for covering the tank filler neck of automotive vehicles
Clapet d'obturation pour couvrir l'embout de remplissage d'automobiles

(30) Priorität: 06.11.1997 DE 19748975
(43) Veröffentlichungstag der Anmeldung: 12.05.1999
(73) Patentinhaber: Mittelhäuser, Bernhard, D-30900 Wedemark (DE)
(72) Erfinder: Thiesen, Uwe, 49413 Dinklage (DE); Mittelhäuser, Bernhard, 30900 Wedemark (DE)
(74) Vertreter: Depmeyer, Jochen

(56) Entgegenhaltungen:
- EP-A- 0 360 027
- DE-A- 4 327 930
- US-A- 3 656 260

## Beschreibung

Die Erfindung betrifft eine Klappe zum Abdecken des Tankstutzens bei Kraftfahrzeugen, wobei die Klappe eine in einer Umlaufenden, am außeren Umfang befindlichen Nut angeordnete, ringförmige, elastische Dichtung zum Abdichten des Spaltes zwischen dem Klappenrand und der Außenhaut des Fahrzeuges aufweist.

Um bei bekannten Klappen die Dichtungsringe ausreichend fest anbringen zu können, bedarf es spezieller Klebe- und Haftmittel, mit denen die Dichtungsringe in besonderen Arbeitsgängen befestigt werden, nachdem die Klappen in aller Regel durch Lackierung auf die gewünschte Farbgebung abgestimmt worden sind. Diese zusätzlichen Arbeitsgänge verteuern nicht nur die Klappenherstellung, vielmehr ergeben sich dabei auch vergleichsweise große Ausschußquoten.

Eine Tankklappe der eingangs genannten Art mit den Merkmalen des Oberbegriffs des 1. Anspruchs ist aus der DE-A-4327930 bekannt. Diese Tankklappe ist aus einem äußeren und einem inneren Teil zusammengesetzt; bei ihrer Herstellung wird der Dichtungsring auf eines der beiden Teile aufgelegt, anschließend das andere Teil angefügt und beide Teile durch Schweißen miteinander verbunden. Der Dichtungsring ist dann unlösbar zwischen den beiden Teilen angeordnet. Der Aufbau dieser Tankklappe ist relativ aufwendig.

Aus der US-A-3656260 ist eine Profildichtung bekannt, die zur Befestigung in einer Nut vorgesehen ist und z.B. am Kofferraum eines Fahrzeuges verwendet werden soll. Um bei der Befestigung auf Klebemittel verzichten zu können, ist der in der Nut angeordnete Teil des Profils fester ausgebildet als der Teil des Profils, der die eigentliche Dichtung bildet. Die Dichtung hat ein schlauchartiges, hohles Profil. Sie und die zu ihrer Befestigung dienende Nut sind relativ breit und daher für eine Tankklappe, bei der kleinere Abmessungen erwünscht sind, weniger geeignet.

Der Erfindung liegt die Aufgabe zugrunde, die Befestigung des Dichtungselementes in der Nut zu vereinfachen, wobei die erwähnten Haftmittel überflüssig und Herstellungsfehler weitgehend ausgeschaltet werden sollen.

Zur Lösung dieser Aufgabe besteht erfindungsgemäß zumindest ein Teil des in der Nut liegenden Querschnitts der Dichtung aus einem gegenüber dem eigentlichen, vorzugsweise etwa lippenartigen Dichtungselement wesentlich härter eingestellten Elastomer, wobei eine im eingebauten Zustand der Klappe innere Umfangskante der Klappe gegenüber einer äußeren Umfangskante radial nach innen versetzt ist und sich der härtere Querschnittsbereich von der vorspringenden äußeren Kante der Klappe schräg nach innen bis in den Bereich der inneren Unfangskante erstreckt. Dabei können Härtegradunterschiede von mehr als 15 Shoregrade gewählt werden, und die unterschiedlich harten Querschnittsbereiche des Dichtungsringes können festhaftend miteinander verbunden sein.

Derartige Dichtungsringe werden als Formkörper so gefertigt, daß bereits bei ihrer Herstellung eine festhaftende Verbindung zwischen den erwähnten Querschnittsbereichen entsteht. Der Dichtungsring wird also als ein Ganzes angeliefert und so bei der Klappenfabrikation verarbeitet.

Die Montage der Dichtungsringe kann durch eine hinterschnittene Nut am Klappenkörper erreicht werden, in die der Dichtungsring eingezwängt wird (sog. Einclipsen), um ihn dort durch seine elastische Eigenspannung in der Nut zu halten. Darüber hinaus kann aber auch eine Befestigung des Dichtungsringes durch einen Schrumpfvorgang erreicht werden. Dazu wird der Dichtungsring erwärmt und im gedehnten Zustand in die Montagestellung gebracht. Die Fixierung erfolgt dann durch die beim Abkühlen entstehende Kontraktion des Dichtungsringes zum Eingriff in die Umfangsnut des Klappenkörpers.

Die beiden vorerwähnten Querschnittsabschnitte werden so angeordnet und bemessen, dass durch den härteren Querschnittsbereich die Halterung des Dichtungsringes innerhalb seiner Nut sichergestllt ist. Vorzugsweise wird der härtere Bereich ( Fussbereich ) so angeordnet, dass er sich innerhalb der zugehörigen Nut befindet, wobei er diese ganz ausfüllen kann, während der für die Abdichtung bestimmte Querschnittsbereich sich vorwiegend, vorzugsweise aber in seiner Gesamtheit ausserhalb des Nutquerchnittes befindet, um dort die Dichtungsfunktion durch elastische Verformung besonders gut - meist durch Verbiegen - erfüllen zu können.

Weitere Einzelheiten der Erfindung werden anhand der Zeichnung erläutert, in der ein Ausführungsbeispiel der Erfindung dargestellt ist.

Es zeigen :
Fig. 1 einen Teilschnitt durch die Aussenhaut eines Kraftfahrzeuges mit einem napfartigen Behälter zu Aufnahme des Tankstutzens mit einer schwenkbar gelagerten, im Grundriss runden Klappe zum Verschliessen des Behälters in schematischer Teildarstellung im Schnitt und
Fig. 2 einen Randabschnitt der Tankklappe für die Einrichtung gemäss Fig. 1 im Schnitt, und zwar in vergrösserter Darstellung.

Die Aussenhaut 1 des Fahrzeuges hat eine Ausnehmung 2, die zur Aufnahme eines unten zum Durchtritt des Tankstutzens durchbrochene Behälters 3 dient. Dieser hat eine seitliche Ausnehmung 4 zur schwenkbaren Zapfenlagerung eines Schwenkarmes 5, an dem die Tankklappe 6 befestigt ist. Eine Verschwenkung der Tankklappe 6 kann somit in Richtung des Pfeiles a erfolgen.

Am äusseren Rand der Tankklappe 6 befindet sich eine Umfangsnut 7 zur Aufnahme eines Dichtungsringes 8, der seitlich aussen an einer Stufe 9 des Behälters 3 dichtend anliegt. Somit wird der Spalt bei 10 abgedichtet.

Die Besonderheit der Erfindung besteht im Aufbau des Dichtungsringes 8 mit den Ziel dessen Fixierung in der Umfangsnut 7 herbeizuführen.

Der Fuss 11 des Dichtungsringes 8 füllt die Umfangsnut 7 aus und erstreckt sich bis zur äusseren Kante 12 der Tankklappe 6 und von dort entlang einer konischen Fläche 13 nahe bis an den unten gelegenen Rand 14 der Umfangsnut 7. Der fest mit dem Fuss 11 verbundene zungenartige, ringförmige Vorsprung 15 als aussen gelegener, weicher Querschnitsbereich erstreckt sich aufgrund der konischen Fläche 13 bis in die Nähe des Randes 14 unterhalb des äusseren Randes der Tankklappe 6.

Diese Gestaltung des Vorsprungs 15 erlaubt eine elastische Verformung durch Abbiegen, während der nach unten geführte Querschnittsbereich bei 16 eine elastische Auflage senkrecht zur Klappenebene ermöglicht.

Die Dichtung 8 besteht aus einem Elastomer, jedoch ist der Fuss 11 zähhart eingestellt bei einer Shore-Härte von etwa 70 - 90, während der angehaftete Vorsprung 15 mit dem Querschnitsbereich 16 weichelastisch ausgeführt ist und eine um 15- 30 Shore-Grade A geringere Härte aufweist.

Diese Ausbildung des Dichtungsringes 8 hat den Vorteil, dass auf Haftmittel verzichtet und die Fixierung des Dichtungsringes 8 durch den oben beschriebenen Fuss 11 vollzogen werden kann. Die Fixierung erfolgt hierbei durch Erwärmen und Schrumpfen des Dichtungsringes 8 auf die vorgegebene Querschnittsform der Tankklappe. Jedoch ist es aber auch möglich, die Fixierung - wie erwähnt - durch sog. Einclipsen beim Vorhandensein von Hinterschneidungen im Nutbereich herbeizuführen.

Es versteht sich, dass die Erfindung nicht an eine besondere Formgebung der Tankklappe 6 und des Behälters 3 gebunden ist.

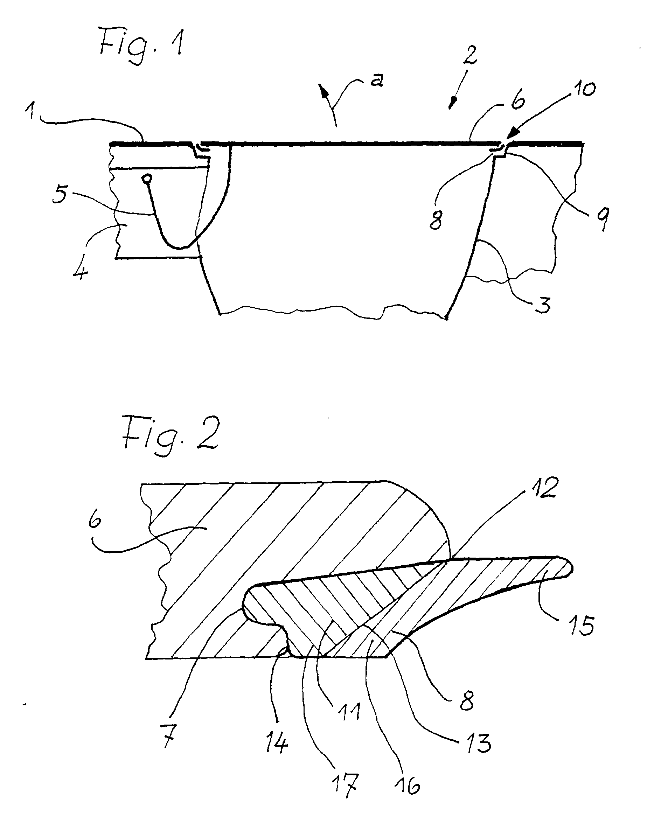

Aus Fig. 2 ist ersichtlich, dass der Rand 14 gegenüber der Kante 12 radial nach innen versetzt ist. Um unter diesen Voraussetzungen zu vermeiden, dass der Dichtungsring 8 nach unten abklappt, liegt dieser bzw. dessen Fuss 11 mit einem Stützvorsprung 17 am Rand 14 an. Der Stützvorsprung 17 schliesst dabei nach unten hin mit der Unterseite der Klappe 6 ab.

## Patentansprüche

1. Klappe zum Abdecken des Tankstutzens bei Kraftfahrzeugen, wobei die Klappe eine in einer am äußeren Umfang befindlichen Nut (7) angeordnete, ringförmige, elastische Dichtung (8,11,15) zum Abdichten des Spaltes zwischen dem Klappenrand und der Außenhaut des Fahrzeuges aufweist, **dadurch gekennzeichnet, daß** zumindest ein Teil (11) des in der Nut (7) liegenden Querschnitts der Dichtung (11, 8, 15) aus einem gegenüber dem eigentlichen, vorzugsweise etwa lippenartigen Dichtungselement (15) wesentlich härter eingestellten Elastomer besteht, wobei eine im eingebauten Zustand der Klappe innere Umfangskante der Klappe gegenüber einer äußeren Umfangskante radial nach innen versetzt ist und wobei sich der härtere Querschnittsbereich (11) von der vorspringenden äußeren Kante (12) der Klappe (6) schräg nach innen (konische Fläche 13) bis in den Bereich der inneren Umfangskante erstreckt.

2. Klappe nach Anspruch 1, **dadurch gekennzeichnet, daß** der Härtegradunterschied etwa 15 - 30 Shore-Grade A beträgt.

3. Klappe nach Anspruch 1, **dadurch gekennzeichnet, daß** die Querschnittsbereiche unterschiedlicher Härte festhaftend miteinander verbunden sind.

4. Klappe nach Anspruch 1, **dadurch gekennzeichnet, daß** der härtere Querschnittsbereich (11) aus einem zum Fixieren des Dichtungskörpers (8) durch Schrumpfen fähigen Werkstoff besteht.

5. Klappe nach Anspruch 1, **dadurch gekennzeichnet, daß** der härtere Querschnittsbereich (11) in eine hinterschnittene Umfangnut der Klappe (6) unter elastischer Verformung dieses Bereiches eindrückbar ist.

6. Klappe nach Anspruch 1, **dadurch gekennzeichnet, daß** der weichere Querschnittsbereich einen lippenartigen Vorsprung (15) gegenüber der äußeren Kante (12) der Klappe und einen eine Fläche (13) zwischen äußerer und innerer Umlaufkante abdeckenden Bereich (16) aufweist.

7. Klappe nach Anspruch 1, **dadurch gekennzeichnet, daß** ihr Dichtungsring (8) haft- und bindemittelfrei gehaltert ist.

8. Klappe nach Anspruch 1, **dadurch gekennzeichnet, daß** der Dichtungskörper (8) im Querschnitt gesehen mit einem Stützvorsprung (17) versehen ist, der an einem Rand (14) im Bereich der inneren Umfangskante anliegt.

9. Klappe nach Anspruch 8, **dadurch gekennzeichnet, daß** der Dichtungsring (8) praktisch mit der Unterseite der Klappe (6) abschließt.

## Claims

1. Flap for covering the tank filler neck for automotive vehicles, the flap having an annular, resilient seal (8, 11, 15), which is disposed in a groove (7) situated on the outer periphery, for sealing the gap between the flap edge and the exterior panelling of the vehicle, **characterised in that** at least a portion (11) of the cross-section of the seal (11, 8, 15) lying in the groove (7) is formed from an elastomeric material, which is set to be substantially harder than the actual, preferably substantially lip-like sealing member (15), an internal circumferential edge of the flap, when viewed in the installed position of the flap, being offset radially inwardly relative to an outer circumferential edge, and the harder cross-sectional region (11) extending from the protruding outer edge (12) of the flap (6) inclinedly inwardly (conical area 13) to the region of the inner circumferential edge.

2. Flap according to claim 1, **characterised in that** the difference in the degree of hardness is substantially 15 - 30 Shore A degrees.

3. Flap according to claim 1, **characterised in that** the cross-sectional regions of variable hardness are adhesively interconnected.

4. Flap according to claim 1, **characterised in that** the harder cross-sectional region (11) is formed from a material which is capable of fixing the sealing body (8) by shrinkage.

5. Flap according to claim 1, **characterised in that** the harder cross-sectional region (11) can be pressed into an undercut circumferential groove in the flap (6) with the resilient deformation of this region.

6. Flap according to claim 1, **characterised in that** the softer cross-sectional region has a lip-like projection member (15) protruding beyond the outer edge (12) of the flap and a region (16) which covers an area (13) between the outer and inner circumferential edges.

7. Flap according to claim 1, **characterised in that** its sealing ring (8) is mounted in an adhesive- and bonding agent-free manner.

8. Flap according to claim 1, **characterised in that**, when viewed in cross-section, the sealing body (8) is provided with a supporting projection member (17), which abuts against one edge (14) in the region of the inner circumferential edge.

9. Flap according to claim 8, **characterised in that** the sealing ring (8) practically terminates with the underside of the flap (6).

## Revendications

1. Volet de recouvrement de la tubulure du réservoir d'un véhicule automobile, le volet comprenant une garniture (8, 11, 15) élastique, annulaire, disposée dans une gorge (7) se trouvant sur le pourtour extérieur et destinée à rendre étanche l'intervalle entre le bord du volet et la peau extérieure du véhicule, **caractérisé en ce qu'**au moins une partie (11) de la section transversale se trouvant dans la gorge (7) de la garniture (11, 8, 15) d'étanchéité est en un élastomère sensiblement plus dur que l'élément (15) d'étanchéité proprement dit, de préférence à peu près en forme de lèvre, un bord intérieur périphérique du volet étant, lorsque le volet est monté, décalé radialement vers l'intérieur par rapport à un bord périphérique extérieur, et la partie (11) de section transversale plus dure s'étendant du bord (12) extérieur en saillie du volet (6), de manière inclinée vers l'intérieur (surface 13 conique) jusqu'à la partie du bord périphérique intérieur.

2. Volet suivant la revendication 1, **caractérisé en ce que** la différence de degré de dureté est d'environ 15 à 30 degré Shore A.

3. Volet suivant la revendication 1, **caractérisé en ce que** les parties de section transversale de dureté différente sont reliées entre elles, en adhérant solidement.

4. Volet suivant la revendication 1, **caractérisé en ce que** la partie (11) de la section transversale, qui est la plus dure, est en un matériau susceptible d'immobiliser le corps (8) d'étanchéité par retrait.

5. Volet suivant la revendication 1, **caractérisé en ce que** la partie (11) de la section transversale, qui est la plus dure, peut être repoussée dans une gorge périphérique à contre dépouille du volet (6) avec déformation élastique de cette partie.

6. Volet suivant la revendication 1, **caractérisé en ce que** la partie de la section transversale la plus souple comporte une saillie (15) en forme de lèvre, par rapport au bord (12) extérieur du volet et une partie (16) recouvrant une surface (13) comprise entre le bord périphérique extérieur et le bord périphérique intérieur.

7. Volet suivant la revendication 1, **caractérisé en ce que** sa bague (8) d'étanchéité est maintenue en étant exempte de colle et de liant.

8. Volet suivant la revendication 1, **caractérisé en ce que** la garniture (8) d'étanchéité a, tel que considéré en section transversale, une saillie (17) d'appui qui s'applique sur un bord (14) de la partie du bord périphérique intérieur.

9. Volet suivant la revendication 8, **caractérisé en ce que** la bague (8) d'étanchéité se termine pratiquement par la face inférieure du volet (6).
